# EUROPEAN PATENT APPLICATION

(11) **EP 4 640 366 A2**
(43) Date of publication of application: **29.10.2025**
(21) Application number: 25170464.9
(22) Date of filing: 14.04.2025
(51) Int. Cl.: B23P 15/42, B23D 43/02, B24B 3/16, B24B 19/00, B24B 19/02

(54) **BROACH CUTTER GRINDING WITH RAKE ANGLE CONTROL**

(30) Priority: 12.04.2024 US 202463633437 P
(71) Applicant: RTX Corporation, Farmington, CT 06032 (US)
(72) Inventor: GUO, Changsheng, South Windsor, 06074 (US); RANGANATH, Santosh K., Glastonbury, 06033 (US); KOUNTANYA, Raja K., Farmington, 06032 (US)
(74) Representative: Dehns

(57) **Abstract**

A broach (20) or broach segment (20) has a spine (22). A longitudinal array of teeth (40-1...40-n) protrude from the spine (22), each said tooth (40-1...40-n) having: a first face and an opposite second face; and a distal surface joining the first face and second face; and at least some of the teeth (40-1...40-n) being firtree teeth (40-1...40-n) and have a peripheral trench adjacent the cutting edge of the at least one tooth (40-1...40-n).

## Description

### BACKGROUND

The disclosure relates to gas turbine engines. More particularly, the disclosure relates to machining blade retention slots in turbine engine disks.

Gas turbine engines (used in propulsion and power applications and broadly inclusive of turbojets, turboprops, turbofans, turboshafts, industrial gas turbines, and the like) include compressor at turbine disks each bearing a circumferential array of blades. In many such disks, the blades have attachment features received in associated slots of the disk backlocked against radial displacement under centrifugal loading. Example backlocking features comprise so-called firtree attachment roots of the blades and complementary firtree slots in the disks.

In one example of disk slot formation, a straight or stepped precursor slot is formed in the disk precursor such as by a combination of forming in-place in an initial casting or powder metallurgical forging process and grinding via a rotary grinding wheel traversed parallel to an axis of the blade disk with the grinding disk axis of rotation transverse thereto. Alternatively, a slot profile close to the ultimate firtree shape may be formed using a using wire EDM process. Thereafter, such a rough slot may be formed into the final firtree shape via one or more linear broaches with progressive teeth/cutters progressively enlarging the slot. Typical linear broaches are segmented with the segments attached end to end. In one example, a main broach forms or refines the firtree shape along most of the depth of the slot. A first additional broach may refine the base of the slot and a second additional broach may refine the opening (outer diameter (OD) boundaries or edge regions) of the slot and disk OD between slots.

Example teeth/cutters for such a main broach are formed with cutting faces machined via the sides of associated grinding wheels. For example, the broach may have a generally isosceles triangular cross-section spine distal portion and the grinding wheel may be traversed relative to the sides of such spine distal portion (or parallel to the direction of such sides will ultimately have in a simultaneous machining from both the teeth faces and the spine initially).

In subsequent regrinding operations, the grinding wheels may again be traversed parallel to the spine faces but not contacting therewith, machining only the teeth faces.

### SUMMARY

One aspect of the disclosure involves a method for grinding a disk slot broach or broach segment, the broach or broach segment comprising: a spine; and a longitudinal array of teeth protruding from the spine. Each said tooth has: a first face and an opposite second face; and a distal surface joining the first face and second face. The method comprises grinding the first face of each tooth of a plurality of said teeth with a lateral surface of a rotating quill driven for rotation about a quill axis.

In a further example of any of the foregoing examples, additionally and/or alternatively, the grinding comprises: a continuous reorientation of the quill.

In a further example of any of the foregoing examples, additionally and/or alternatively, the grinding comprises reorienting the quill to provide a desired rake angle.

In a further example of any of the foregoing examples, additionally and/or alternatively, the grinding with the lateral surface of a rotating quill follows grinding with a face of a grinding wheel to form a peripheral trough in a face left by said grinding wheel.

In a further example of any of the foregoing examples, additionally and/or alternatively, the grinding comprises reorienting the quill to provide a rake angle of 7.5° to 8.5° over a majority of a cutting edge of at least one tooth.

In a further example of any of the foregoing examples, additionally and/or alternatively, the reorienting provides said rake angle of 6.0° to 10.0° over said majority of said cutting edge of a plurality of the teeth.

In a further example of any of the foregoing examples, additionally and/or alternatively, the reorienting provides said rake angle of 6.0° to 10.0° over said majority of said cutting edge of at least 25% of all teeth.

In a further example of any of the foregoing examples, additionally and/or alternatively, the reorienting provides said rake angle of 6.0° to 10.0° over at least 70% of said cutting edge of at least 25% of all teeth.

In a further example of any of the foregoing examples, additionally and/or alternatively, wherein the reorienting provides: said rake angle of 6.0° to 10.0° over said majority of said cutting edge of at least 25% of each tooth of a trailing 10% of teeth.

In a further example of any of the foregoing examples, additionally and/or alternatively, the reorienting provides said rake angle of 6.0° to 10.0° over at least 70% of said cutting edge of at least 25% of each tooth of trailing 10% teeth.

In a further example of any of the foregoing examples, additionally and/or alternatively, the grinding forms a peripheral trench adjacent the cutting edge of at least one tooth.

In a further example of any of the foregoing examples, additionally and/or alternatively, the trench is segmented.

In a further example of any of the foregoing examples, additionally and/or alternatively, the trench extends along one or more flat facets.

In a further example of any of the foregoing examples, additionally and/or alternatively, the grinding is a regrind and forms a rake angle varying relative to aa surface inboard thereof. The grinding may form a recess that varies between a step and a trough.

In a further example of any of the foregoing examples, additionally and/or alternatively, a cylindrical lateral surface of the quill forms a straight section outer terminal portion of the trench; and a domed end of the quill forms a concave inboard terminal boundary/wall of the trench for deflecting curling chips.

A further aspect of the disclosure involves a method for grinding a disk slot broach or broach segment, the broach or broach segment comprising: a spine; and a longitudinal array of teeth protruding from the spine. Each said tooth has: a first face and an opposite second face; and a distal surface joining the first face and second face. The method comprises: one or more steps for forming teeth precursors; and a step for grinding the first face of each tooth of a plurality of said teeth with a lateral surface of a rotating quill driven for rotation about a quill axis.

A further aspect of the disclosure involves a broach or broach segment comprising: a spine; and a longitudinal array of teeth protruding from the spine. Each said tooth has: a first face and an opposite second face; and a distal surface joining the first face and second face. At least some of the teeth are firtree teeth. A rake angle varies by no more than +/- 0.5° over a majority of a cutting edge of at least one tooth.

In a further example of any of the foregoing examples, additionally and/or alternatively, the firtree teeth have a plurality of lobes protruding on both sides of a centerplane and progressively increasing in transverse dimension toward a distal edge of the broach, optionally, there being 3 to 6 such lobes; the rake angle is 7.5° to 8.5° over a majority of a cutting edge of at 25% of the teeth of the broach or broach segment.

In a further example of any of the foregoing examples, additionally and/or alternatively, the rake angle of 7.5° to 8.5° is over a majority of a cutting edge of at 25% of the trailing 10% of teeth of the broach.

A further example of any of the foregoing examples may additionally and/or alternatively include a peripheral trench adjacent the cutting edge of the at least one tooth.

In a further example of any of the foregoing examples, additionally and/or alternatively, the peripheral trench recesses the cutting edge by a distance S_{E} from the continuation/projection of the first face.

In a further example of any of the foregoing examples, additionally and/or alternatively, the peripheral trench has a maximum depth S_{D} at least 110% of the recess depth S_{E}; and the peripheral trench has a concave inner boundary at a terminal angle θ_{C} of 55° to 80° off parallel to said projection.

In a further example of any of the foregoing examples, additionally and/or alternatively, the peripheral trench is in at least one flat facet.

A further aspect of the disclosure involves a broach or broach segment comprising: a spine; and a longitudinal array of teeth protruding from the spine. Each said tooth has: a first face and an opposite second face; and a distal surface joining the first face and second face. At least some of the teeth are firtree teeth and have a peripheral trench adjacent the cutting edge thereof.

In a further example of any of the foregoing examples, additionally and/or alternatively, the peripheral trench recesses the cutting edge by a distance S_{E} from the continuation/projection of the first face.

In a further example of any of the foregoing examples, additionally and/or alternatively, the peripheral trench has a maximum depth S_{D} at least 110% of the recess depth S_{E}; and the peripheral trench has a concave inner boundary at a terminal angle θ_{C} of 55° to 80° off parallel to said projection.

In a further example of any of the foregoing examples, additionally and/or alternatively, the peripheral trench is continuous along at least two full lobes on each side of at least one tooth, optionally at least three lobes.

The features of the examples above may be combined in any combination unless expressly indicated otherwise or technically infeasible.

The details of one or more examples are set forth in the accompanying drawings and the description below. Other features, objects, and advantages will be apparent from the description and drawings, and from the claims.

### BRIEF DESCRIPTION OF THE DRAWINGS

FIG. 1 is a first view of broach assembly.
FIG. 2 is view of a broach segment of the broach of FIG. 1.
FIG. 3 is view of the broach segment broaching a slot in a disk.

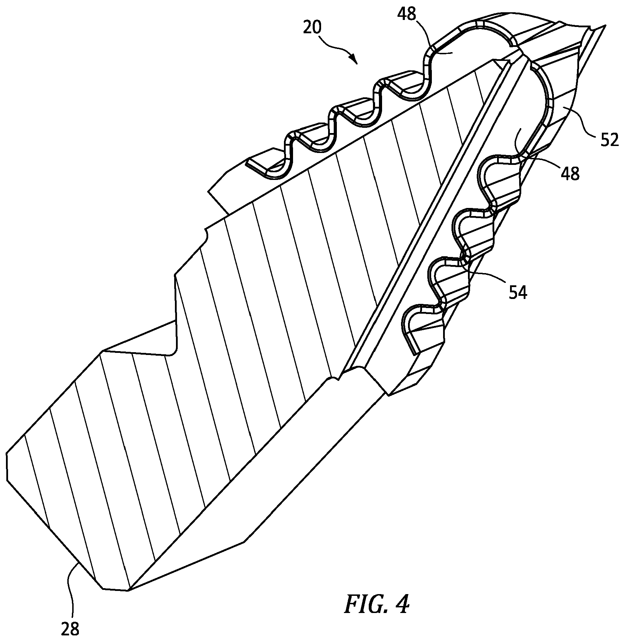

FIG. 4 is a cutaway view of the broach showing a single tooth.
FIG. 5 is a transverse sectional view of the broach looking longitudinally at a leading face of a tooth.
FIG. 5A is an enlarged view of the broach of FIG. 5.
FIG. 5B is a further enlarged view of the broach of FIG. 5.
FIG. 5C is a further enlarged view of the broach of FIG. 5 showing several stages in abrasive machining.
FIG. 6 is an enlarged top view of a notional hybrid broach tooth with one half reflecting the tooth of FIGs. 4 and 5 and the other half reflecting a baseline tooth looking directly down on the tooth.
FIG. 7 is a cutting face view of the hybrid tooth of FIG. 6.
FIG. 8 is a transverse longitudinal sectional view of the hybrid tooth taken along line 8-8 of FIG. 7.
FIG. 9 is a sectional view of a cutting edge of the tooth of FIGs. 4 and 5 at line 9-9 of FIG. 5B.
FIG. 10 is a sectional view of the baseline tooth corresponding to FIG. 9.
FIG. 11 is a sectional view of the cutting edge of the tooth at line 11-11 of FIG. 5B.
FIG. 12 is a sectional view of the baseline tooth corresponding to FIG. 11.
FIG. 13 is a sectional view of the cutting edge of the tooth at line 13-13 of FIG. 5B.
FIG. 14 is a sectional view of the baseline tooth corresponding to FIG. 13.
FIG. 15 is a sectional view of the cutting edge of the tooth at line 15-15 of FIG. 5B.
FIG. 16 is a sectional view of the baseline tooth corresponding to FIG. 15.
FIG. 17 is a sectional view of the cutting edge of the tooth at line 17-17 of FIG. 5B.
FIG. 18 is a sectional view of the baseline tooth corresponding to FIG. 17.
FIG. 19 is a sectional view of the cutting edge of the tooth at line 19-19 of FIG. 5B.
FIG. 20 is a sectional view of the baseline tooth corresponding to FIG. 19.
FIG. 21 is a sectional view of the cutting edge of the tooth at line 21-21 of FIG. 5B.
FIG. 22 is a sectional view of the baseline tooth corresponding to FIG. 21.
FIG. 23 is a sectional view of the cutting edge of the tooth at line 23-23 of FIG. 5B.
FIG. 24 is a sectional view of the baseline tooth corresponding to FIG. 23.
FIG. 25 is a plot of rake angle against a normalized Y dimension for the baseline tooth and revised tooth.
FIG. 26 is a sectional view showing a trough/trench recessing a cutting edge of a broach tooth.
Like reference numbers and designations in the various drawings indicate like elements.

### DETAILED DESCRIPTION

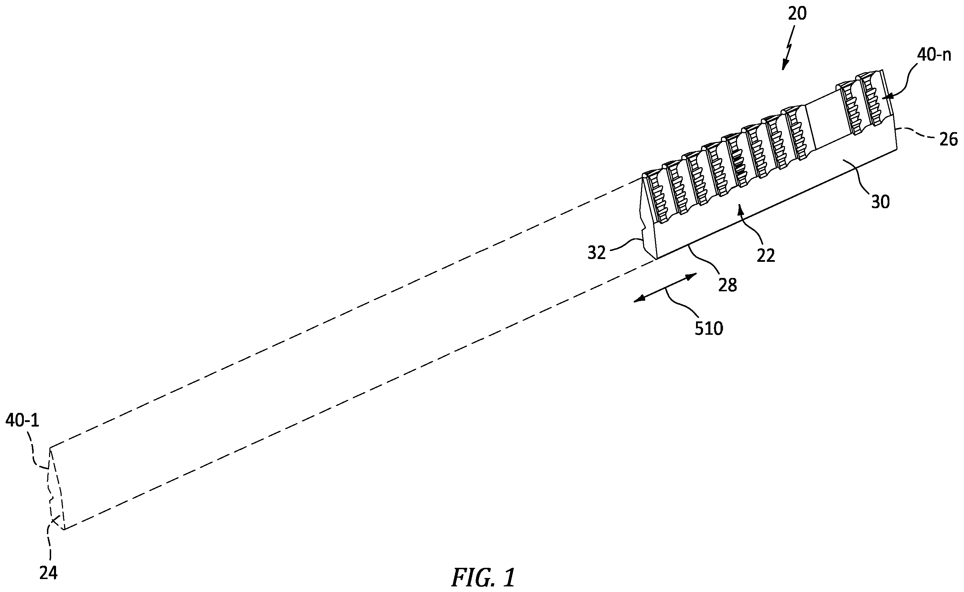

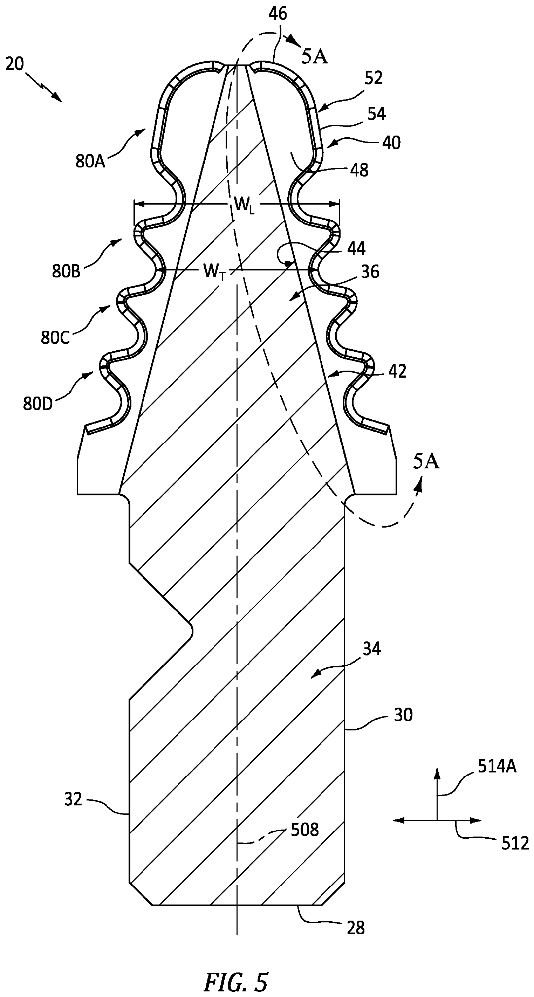

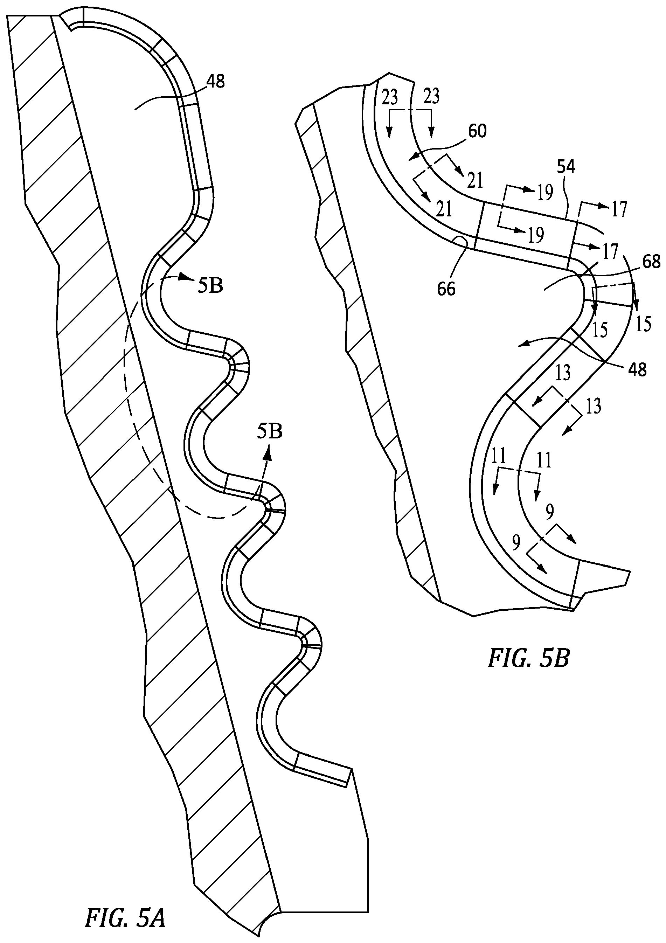

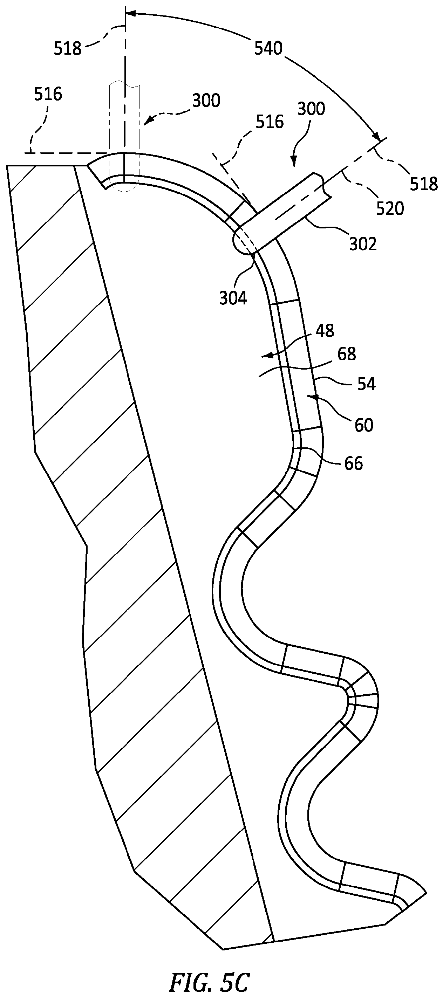

An example broach (assembly/array) 20 (FIG. 1) has a spine 22 extending in a longitudinal direction 510 and having a first end 24 and a second end 26. The spine has a base surface 28 and first and second lateral surfaces 30 and 32. The broach has a central longitudinal centerplane 508 (FIG. 5) between the lateral surfaces. The example spine may be formed having a generally rectangular-sectioned proximal portion 34 and a generally acute isosceles triangular-sectioned distal portion 36. The broach may be longitudinally segmented with individual segments secured end-to-end at their spines. The broach, and each segment thereof, bears a longitudinal array of teeth 40 (40-1 to 40-n shown overall in FIG. 1) progressing in section from a leading tooth to a trailing tooth, each more resembling the ultimate slot than does the prior.

Thus, each segment includes first and second ends, a spine having a base surface and first and second lateral surfaces, and a plurality of said teeth. A first end of the first segment thus forms the first end of the broach assembly/array and the second end of the final segment forms the second end of the broad assembly/array. The segment spines combine to form the assembly/array spine, and respective surfaces combine to form the associated broach surfaces. Each tooth extends distally outward from a junction 42 (FIG. 5) with the spine distal portion 36. The junction of the teeth with the spine may thus be a similar triangle to that of the spine distal portion optionally as a fillet.

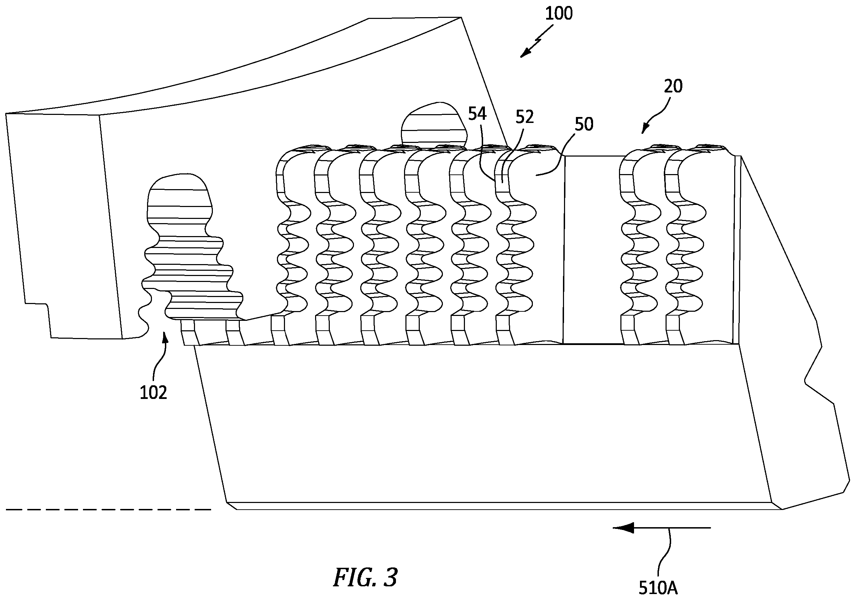

To form a disk 100 (FIG. 3) firtree slot 102 complementary to the firtree root of a blade (not shown), the broach ultimately has lobes corresponding to the lobes of the root. For example, on the initial/leading segment of the broach, teeth may start out with a more stepped configuration progressively changing to lobed so that, along most of the broach segments and most of their teeth, the lobed configuration is discernable. FIG. 5 shows a series of lobes 80A-80C progressing generally from locations corresponding to the inner diameter (near the base of the slot) of the blade root to the outer diameter (near the platform). FIG. 5 also shows a width at the lobes of W_{L} with adjacent troughs having lesser width W_{T}. These widths progressively increase. There are thus corresponding lobe sections on either side of the broach spine for each nominal lobe. An example lobe count is at least three or three to five.

A longitudinal direction (bidirection) is shown as 510 (FIG. 1) with a forward or trailing-to-leading direction shown as 510A. Orthogonal to the spine longitudinal direction (bidirection) 510 (typically designated z), are a spine transverse direction (bidirection) 512 (typically designated x) and a third orthogonal direction 514 (typically a y direction including a tooth protrusion direction 514A). As noted above, the broach and each segment thereof has a longitudinal array of such teeth extending from a leading tooth to a trailing tooth.

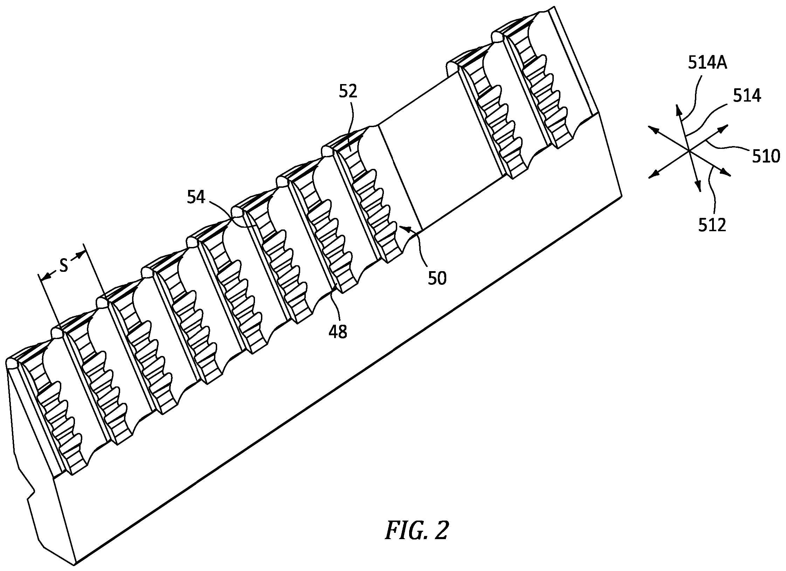

The teeth 40 (FIG. 5) respectively extend in the direction 514A from proximal ends 44 along junctions 42 with the spine to distal free ends or tips 46 and having generally opposite first (leading) 48 and second (trailing) 50 (FIG. 2) faces. The teeth have lateral/distal/peripheral surfaces 52 joining the first and second faces. As is discussed further below, each tooth has a cutting edge 54 formed at an intersection of the first face and the lateral surface. More generally, a distal direction of the tooth may be defined as from the junction 42 outward to the lateral surface 52.

In use, the broach is traversed in the longitudinal direction 510A (FIG. 3) with the teeth passing through a slot precursor progressively from the leading tooth 40-1 in the array to the trailing tooth 40-n in the array. The cutting edges 54 progressively encounter one face of the disk and are drawn through the slot precursor to pass out of the opposite face with each tooth progressively enlarging and reshaping the slot precursor to take the ultimate firtree form.

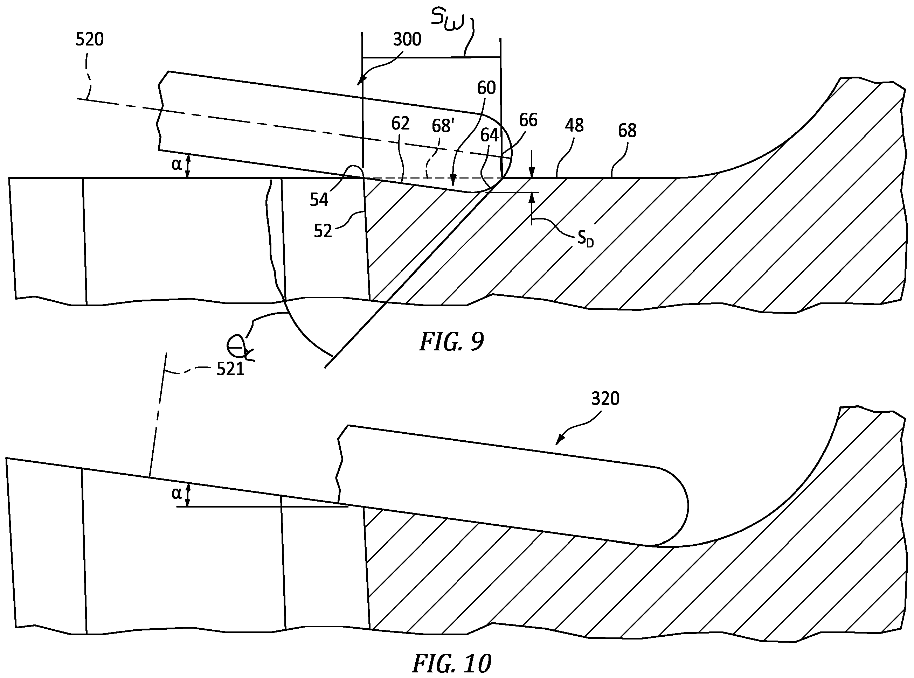

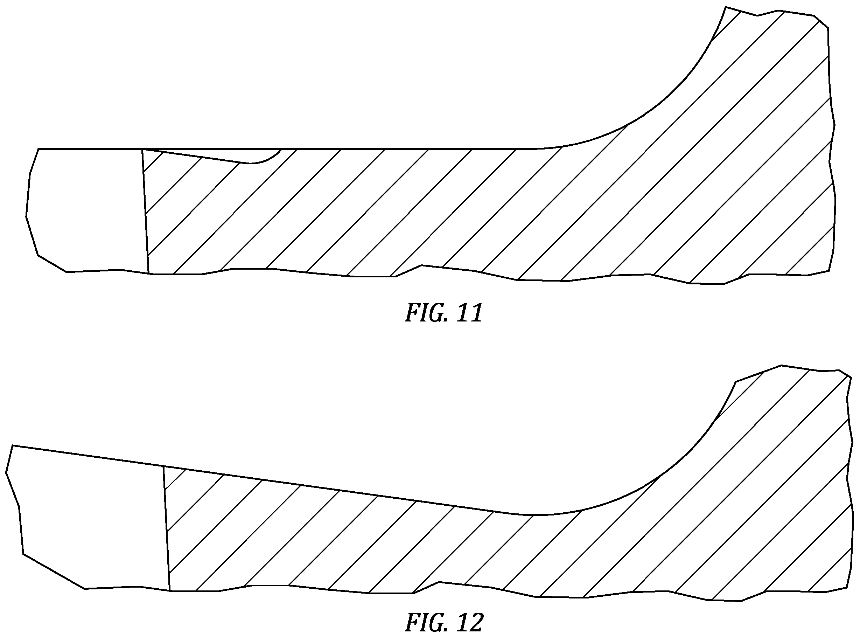

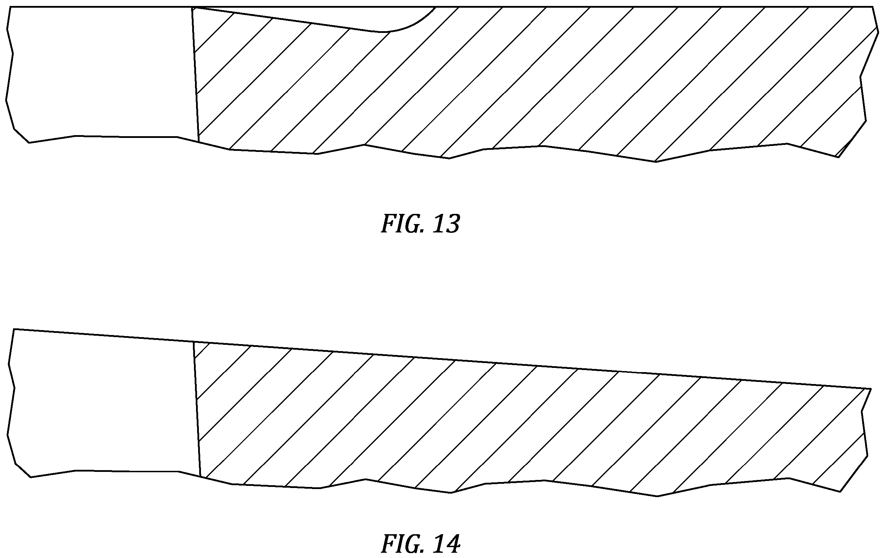

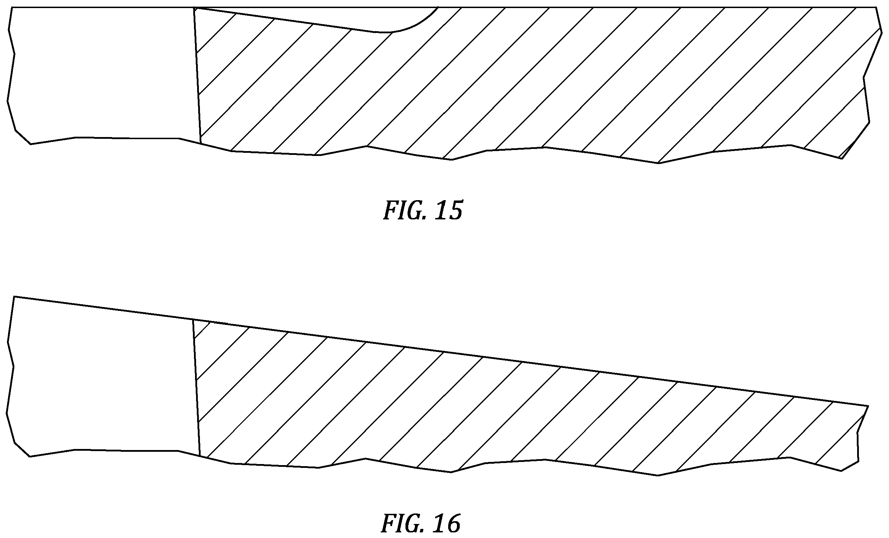

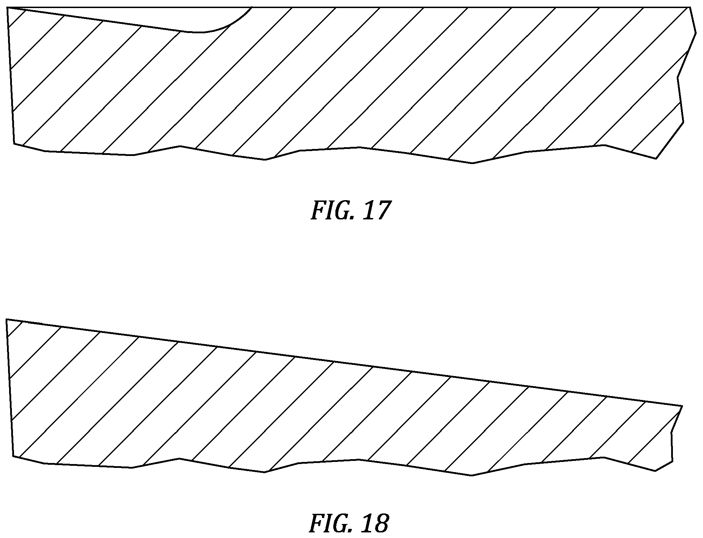

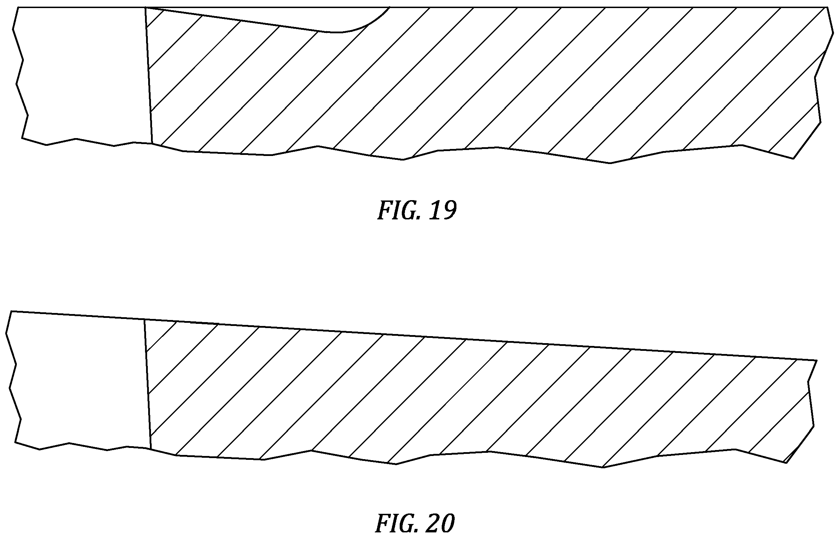

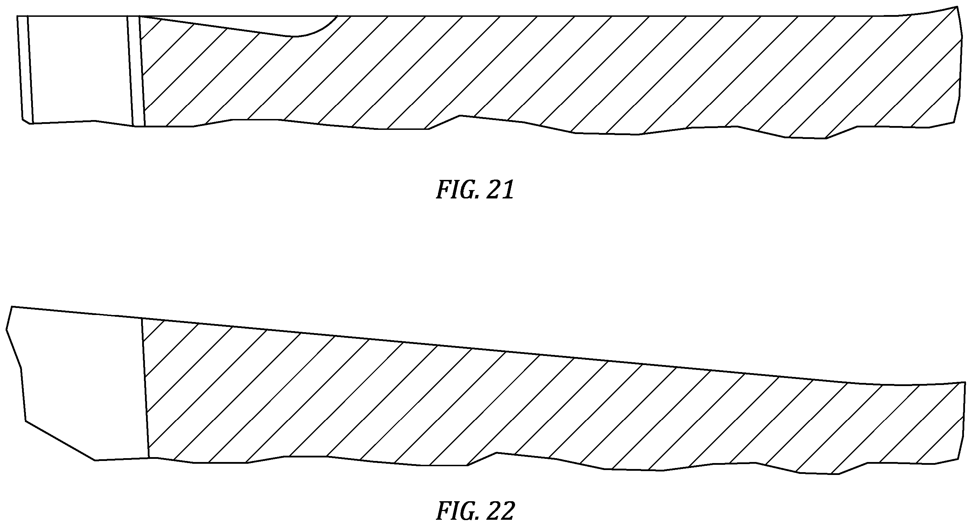

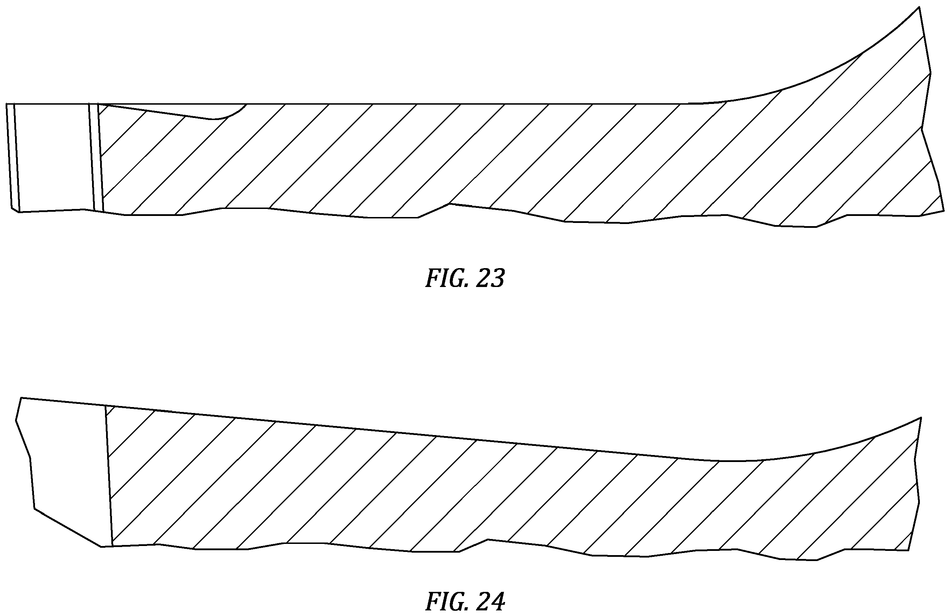

As discussed further below, at any given point along the cutting edge 54, the rake angle α (FIG. 9) is viewed in a longitudinal plane 518 (FIG. 5C) normal to the tangent 516 of the edge 54. FIG. 5C shows two examples of such points and their associated tangents and normal longitudinal planes. FIG. 5B shows the cut planes for FIGs. 9, 11, 13, 15, 17, 19, 21, and 23.

A baseline process, which may be prior art or yet developed, may be an original manufacture process or a re-grind process after use and wear. An example of original manufacture involves machining the broach (or segments thereof) from bar stock. An example re-grind may involve machining the first faces of an existing broach (no matter how originally formed (e.g., optionally including separately-manufactured teeth secured to a spine)).

In a prior art process for grinding or re-grinding the first faces, such first faces are ground with the flat side/face of an abrasive grinding wheel. The rotational axis of the grinding wheel is traversed in a first pass generally parallel to one lateral face of the spine and then in a second pass generally parallel to the other face of the spine. The result is that the first face is formed with two facets off-parallel to each other and intersecting. During the later grinding passes, the grinding wheel will remain spaced apart from the spine and, thus, may omit machining of an inboard/proximal region of the first face.

In contrast to grinding via an essentially flat axial end face of a wheel or disk (also called a side face as distinguished from the outer diameter surface)), an example present grind or regrind process uses, in at least one stage, the domed tip 304 (FIG. 5C) and essentially right circular cylindrical longitudinally-extending outer diameter/circumferential surface 302 of an abrasive quill 300 to grind a trough or trench 60 in each of the teeth leading faces. Example quills have alumina or cubic boron nitride (CBN) abrasives and the abrasives may be plated or vitrified. The example quill has a generally cylindrical main grinding surface portion 302 and a domed convex end surface 304 (e.g., hemispherical or a flattened variation). For purposes of illustration, FIG. 5C shows the trench fully formed with quill in place (whereas during manufacture, the trench to one side of the quill may yet have been machined).

Thus, in the example, the cylindrical portion 302 grinds a generally straight-sectioned portion 62 of the trench/trough surface extending inward from the edge 54 in the sectional view. This extends to a junction with a rounded terminal portion 64, in turn, extending to an edge/junction 66 with an intact portion 68 of the forward surface 48. This intact portion may be generally straight in the cross-section until the fillet/transition to the spine. A projection 68' of this surface may represent an original surface portion formed by the side of a grinding wheel or a larger/coarser quill prior to trench grinding. An example dimension of the lateral extent of the trench is taken between the edge 54 and the intersection 66 as S_{W}. An example trench depth may be measured as S_{D} between the projection 68 and the maximum recessing location. Example S_{W} is about 0.4 mm, more broadly 0.30 mm to 0.60 mm or 0.30 mm to 0.80 mm. Example S_{D} is about 0.03 mm, more broadly 0.025 mm to 0.060 mm or 0.020 mm to 0.080 mm.

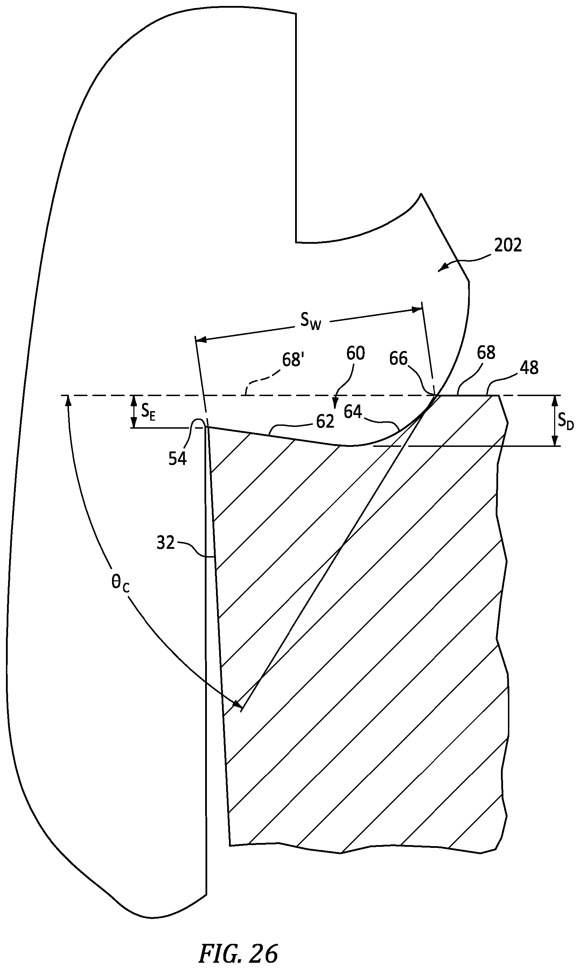

Additionally, an angle of the trough/trench at the intersection 66 relative to the projection 68 is shown as θ_{C}. This angle may influence the curl tightness and is an example at least 45°, more particularly, 45° to 90° or 45° to 80° or 55° to 80°or 55° to 70° or an example about 62° in FIG. 26.

FIG. 9 shows a main portion of the leading face 48 as being essentially normal to the longitudinal direction. Near the edge 54 the trough or trench 60 is formed allowing the angle α to depart from what would otherwise be close to zero in that situation. The main portion of the face 48 may thus be machined via one of the side surfaces of a grinding wheel or disk (there may be multiple passes and stages of grinding from coarse to fine) when the disk axis of rotation is essentially longitudinal. Then, the trench 60 may be machined into the resulting surface such as via the abrasive quill 300 whose central axis/axis of rotation 520 is manipulated during traversal 540 (FIG. 5C) to allow relatively uniform angle α.

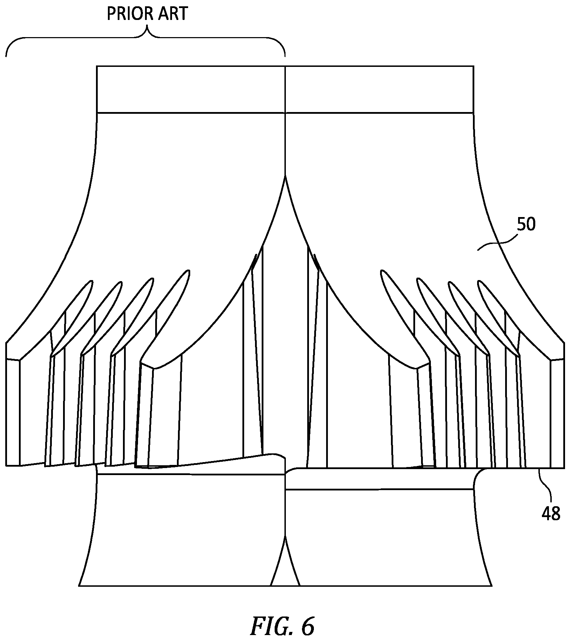

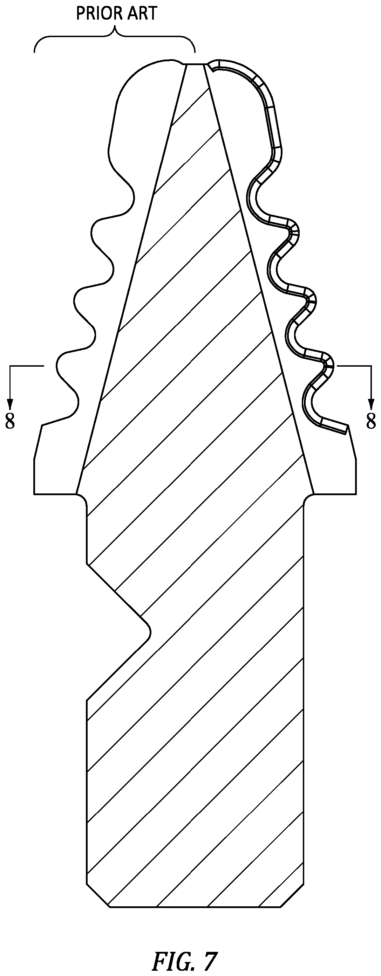

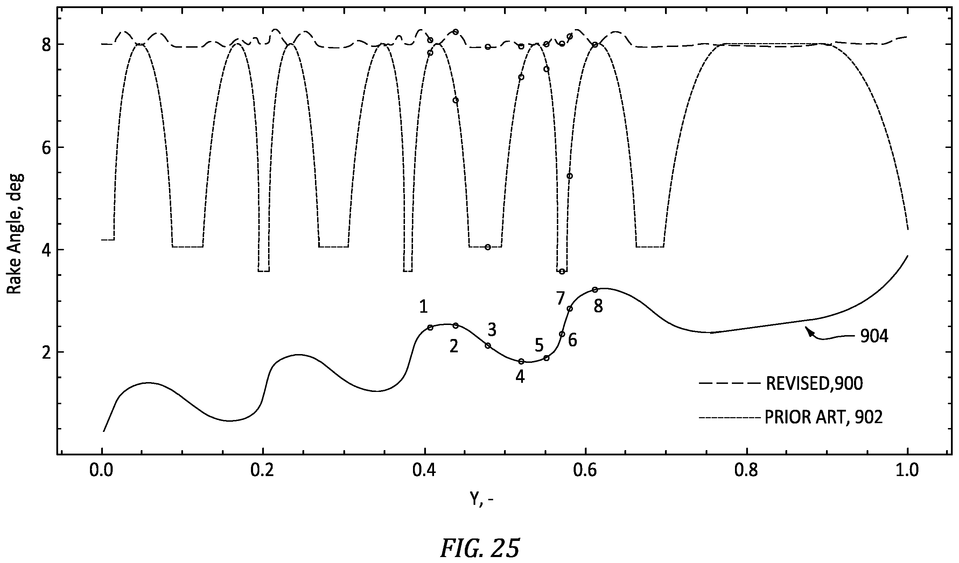

FIGs. 6-8 show a notional hybrid broach tooth. For purposes of comparison, the left side of each drawing represents a prior art tooth ground with wheels/disks only. The right side represents a modified version wherein, at least at a late stage, a quill is used to form the trough/trench 60. At the central intersection, some modeling effects can be ignored. In contrast to FIG. 9, at a corresponding location in the baseline situation, (wherein only a wheel/disk 320 (FIG. 10) grind is used) to achieve a similar angle the wheel/disk itself must be held with its axis of rotation 521 off-longitudinal (also see FIGs. 6-8 hybrid views). FIG. 10 shows an example of this. Due to the convoluted nature of the firtree profile, such prior art grinding will yield substantial variation in rake angle. FIG. 25 has plots of rake angle against a normalized Y dimension for the baseline broach tooth and the modified broach tooth. FIGs. 9/10, 11/12, 13/14, 15/16, 17/18, 19/20, 21/22, and 23/24 respectively show locations identified by points one through eight on the plots of FIG. 25.

FIG. 25 contains plots 900 and 902 of rake angle versus a Y dimension (with the Y dimension zeroed at a somewhat arbitrary point) for an example broach tooth and an example corresponding baseline tooth. Depending upon implementations, the baseline may represent an original tooth ground exclusively with a wheel and the modified tooth may be a quill re-grind thereof (not shown). Or the modified tooth may have a different final wheel pass (e.g., with axis 521 longitudinal or close there to so that the intact face 48 is largely normal to the longitudinal direction) before a quill pass (discussed below). Additionally, FIG. 25 includes an overlay 904 representing the physical shape of the profile of one side of the tooth (and not representing an angle) . Due to slight inversion at the tooth tip, boundary effects are not fully represented at the tip.

In this example, it is seen that the baseline achieves its desired ~8° rake angle only near the lateral troughs and apexes of the lobes dropping substantially along what would be the radial inward and radial outward sides of the lobes (relative to an installed and engine configuration wherein the Y direction is close to radial). The hypothetical Y direction is measured generally relative to the ultimate disk radial direction. Thus, on the graph, zero is close to the outer diameter (OD) periphery of the disk. Accordingly, it is seen that whereas the baseline wheel/disk-only grind has fluctuations of about +/- 2° from a value of ~6° (or about +0/-2° from the hypothetical 8° target), the use of the abrasive quill 300 can provide a much more narrow band with an example margin of +/- 1.0° from a target value (e.g., the 8° value), more narrowly, +/- 0.5° or +/- 1.5°.

The greater uniformity in rake angle may improve a variety of aspects of broaching. There may be much more uniform chip generation, lower forces/power and a better finished surface due to more efficient shearing of material. Regions with larger rake angle in the baseline may contribute longer chips with less curl. Shorter chips with tighter curl may be easier to evacuate. The inboard boundary of the trough/trench (machined by the domed quill tip) can help deflect the chip and contribute to a tight curl. This may allow a tighter spacing between adjacent teeth than in the baseline. Such may contribute to increased throughput if a shorter overall broach assembly is facilitated. The deflection effect may be increased by axially recessing the edge from the projection of the surface adjacent the trough/trench (such projection typically representing the surface prior to quill grinding of the trench or pre-use when quill grinding is being used to re-grind a wheel-ground surface).

FIG. 26 shows such recessing with a trough/trench ground with height differential S_{E} FIG. 26 shows that the raised top face 42 lying above the cutting edge 54 has the effect of bending the incipient chip 202 to curl sufficiently and break in short fragments without decreasing the rake angle at the cutting edge. Consequently, the differential height allows both a uniform rake angle and chip breaking action. Example S_{E} may be about 0.05 mm or, more broadly 0.0 mm to 0.070 mm or 0.020 mm to 0.070 mm or 0.030mm to 0.060 mm. In trough regions, S_{D} is greater than S_{E}. In a non-trough step (discussed below), they are equal. For example troughs S_{D} is at least 110% S_{E}. The percentage can be much higher because S_{E} can go to zero. Further example ranges are at least 150% or at least 200% or 110% to 1000% or 150% to 1000% or 150% to 500%.

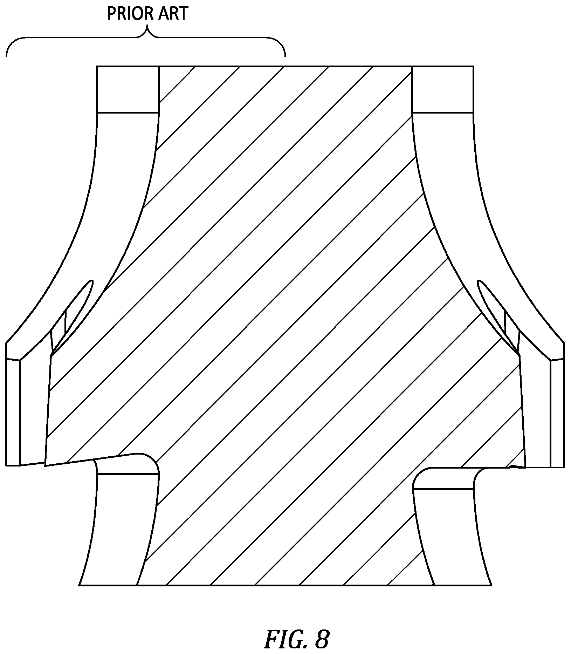

As noted above, many examples of the baseline process incline the grinding wheels to achieve a rake angle. This is seen in the lefthand side of the hybrid view of FIG. 8. In contrast, use of the abrasive quill to grind the trench allows the main grind of the leading surface to be essentially normal to the direction of traversal (right side of FIG. 8). In a hypothetical re-grind of an inclined baseline face such as the left side of FIG. 8, there is little need for the trench 60 (other than to relieve material parallel to the existing face to create a new edge) in locations that otherwise approach the target angle (e.g., the peaks of the FIG. 25 trace 902). In other locations such as the troughs of the FIG. 25 trace 902, the trenches/troughs may be more inclined relative to the pre-existing face (e.g., the rotational axis and side of the quill is off parallel to the face) to increase rake angle from the baseline. In such a situation, the trough may be deeper at such locations. Thus, in locations where the baseline face being reground was already near the 8° target, the quill regrind may form more of a step or shelf transitioning to a trough where the angle had been shy of the target.

In some implementations of original manufacture, a coarser and larger quill or a grinding wheel may be used to form teeth precursors. Thus, for purposes of illustration, FIG. 5C shows 2 particular locations along the cutting edge. This) may be of a final pass although there may have been earlier passes with the same or coarser quill. FIG. 5C shows essentially coincident quill central longitudinal axis and axis of rotation as 520 and an instantaneous direction of traversal of the quill as 540. During traversal, the axis 520 and the direction 540 may be continuously reoriented such as by a multi-axis robot or grinding center. The reorientation is made to best keep the rake angle within a target range.

In an example replacing two linear passes (or groups of passes) of a wheel or wheels, at least the final stage or stages of the quill grinding may be in a single pass with progressive reorientation. In one example of the movement, the reorientation of the quill axis 520 follows the cutting edge 54 and maintains local perpendicularity to the cutting edge while maintaining a target rake angle.

The high variation in rake angle associated with wheel/disk-ground teeth leads to variation in material properties of the incipient chip formed as well the resulting machined surface along the slot. This can include variations in residual tensile stress and white etch layer (WEL). Furthermore variations in rake angle could also lead to reattached chips at certain locations due to piling up of chip material. An advantageous target rake angle is about eight degrees. Much higher and the cutting edge weakens. Much lower and the finished surface suffers the detriments noted above. Thus, an example range for most of the cutting edge would be 6.0° to 10.0°, more narrowly, 7.0° to 9.0°. For a given tooth, this majority may be at least 50% of the linear length of the cutting edge 54 within the radial span of the disk being broached.

Such various relationships may occur more particularly over at least 60% or at least 70% or at least 80% of such linear lengths. And any or all such relationships may be for at least 25% of the teeth (e.g., at least 25 teeth if the broach has 100 teeth) or at least 50% of the teeth or at least 75% of the teeth (overall or of a given segment).

It also may be most relevant to the trailing-most teeth. Depending upon the broach system configuration, benefits will likely be more significant with the trailing-most or finish broach segments. For example, uneven residual stresses, etc. left by the more leading teeth may be removed by the more trailing teeth if only the latter have the desired rake angle. For example, one relevant factor is the tightness of the convolutions of the lobes. In initial roughing broaches, there may be little change in shape. For example, if a broach is merely cutting a groove in the OD and has generally straight surfaces, or if a broach is merely slightly enlarging a pre-cut shape, there may be less variation in rake angle than with the more highly developed convolutions of the trailing broaches. Additionally, considerations of precision and finish quality are going to be more relevant in the trailing broach teeth.

Thus, for example, any or all such relationships may be for at least 25% of the trailing 10% of teeth (e.g., at least three teeth if the broach has 100 teeth) or at least 50% of the last 10% of teeth or at least 75% of the last 10% of teeth. For a segmented broach this may be at least half the teeth of a given segment, such as the final segment. or at least an example five teeth.

Also, the axis 510 will be slightly skew to the rotor axis due to the angling of blade slots. Thus, the broach will hit on one side first and exit on that side first causing asymmetric forces that deform the broach and reduce precision. As noted above, density of teeth may be increased (decreased on-center spacing S). But this does not need to necessarily proportionately decrease broach length. For example, an increase in the number of teeth accomplishing a given finish stage would allow each tooth to have lower forces of engagement. A higher density of teeth allows the broach to be dimensioned so that each tooth removes slightly less material than the baseline and thus is under less force and deformation. The lower forces of engagement mean less deformation and more precise cutting. Additionally, the shorter spacing (and gaps) may allow the broach to become slightly more rigid than the baseline further reducing deflections.

The use of "first", "second", and the like in the following claims is for differentiation within the claim only and does not necessarily indicate relative or absolute importance or temporal order. Similarly, the identification in a claim of one element as "first" (or the like) does not preclude such "first" element from identifying an element that is referred to as "second" (or the like) in another claim or in the description.

One or more embodiments have been described. Nevertheless, it will be understood that various modifications may be made. For example, when applied to an existing baseline a lot and/or broach configuration or manufacture process, details of such baseline may influence details of particular implementations. Accordingly, other embodiments are within the scope of the following claims.

## Claims

1. A method for grinding a disk slot broach (20) or broach segment (20), the broach (20) or broach segment (20) comprising:
a spine (22); and
a longitudinal array of teeth (40) protruding from the spine (22), each said tooth (40-1...40-n) having:
a first face (48) and an opposite second face (50); and
a distal surface (52) joining the first face (48) and second face (50),
the method comprising grinding the first face (48) of each tooth (40-1...40-n) of a plurality of said teeth (40) with a lateral surface (302) of a rotating quill (300) driven for rotation about a quill axis (520).

2. The method of claim 1 wherein the grinding comprises:
a continuous reorientation of the quill (300); and/or
reorienting the quill (300) to provide a desired rake angle (α).

3. The method of claim 1 or 2 wherein:
the grinding with the lateral surface (302) of a rotating quill (300) follows grinding with a face of a grinding wheel (320) to form a peripheral trough (60) in a face left by said grinding wheel (320).

4. The method of any preceding claim, wherein the grinding comprises:
reorienting the quill (300) to provide a rake angle (α) of 7.5° to 8.5° over a majority, optionally at least 70%, of a cutting edge (54) of at least one tooth (40-1...40-n), optionally of a plurality of the teeth (40).

5. The method of claim 4 wherein the reorienting provides:
said rake angle (α) of 7.5° to 8.5° over said majority of said cutting edge (54) of at least 25% of all teeth(40), or over said majority of said cutting edge (54) of at least 25% of each tooth of a trailing 10% of teeth (40).

6. The method of any preceding claim wherein:
the grinding forms a peripheral trench (60) adjacent the cutting edge (54) of the or an at least one tooth (40-1...40-n).

7. The method of claim 6 wherein:
the trench (60) is segmented; and/or
the trench (60) extends along one or more flat facets.

8. The method of any preceding claim wherein:
the grinding is a regrind and forms a rake angle (α varying relative to a surface inboard thereof.

9. The method of any preceding claim wherein:
a cylindrical lateral surface (302) of the quill (300) forms a straight section outer terminal portion (62) of the trench (60); and
a domed end (304) of the quill (300) forms a concave inboard terminal boundary/wall (64) of the trench (60) for deflecting curling chips (202).

10. A broach (20) or broach segment (20) comprising:
a spine (22); and
a longitudinal array of teeth (40) protruding from the spine (22), each said tooth (40-1...40-n) having:
a first face (48) and an opposite second face (50); and
a distal surface (52) joining the first face (48) and second face (50); and
at least some of the teeth (40) being firtree teeth (40); and
a rake angle (α) varying by no more than +/- 0.5° over a majority of a cutting edge (54) of at least one tooth (40-1...40-n); and/or
a peripheral trench (60) adjacent the cutting edge (54) of the at least one tooth (40).

11. The broach (20) or broach segment (20) of claim 10 wherein:
the broach (20) or broach segment (20) includes the rake angle (α) varying by no more than +/- 0.5° over the majority of the cutting edge (54) of the at least one tooth (40);
the firtree teeth (40) have a plurality of lobes (80A-80D) protruding on both sides of a centerplane (508) and progressively increasing in transverse dimension toward a distal edge of the broach (20), optionally, there being 3 to 6 such lobes (80A-80C); and
the rake angle (α) is of 7.5° to 8.5° over a majority of a cutting edge (54) of at 25% of the teeth (40) of the broach (20) or broach segment (20) or over a majority of a cutting edge (54) of at 25% of the trailing 10% of teeth (40) of the broach (20).

12. The broach or broach segment of claim 10 or 11 wherein:
the broach (20) or broach segment (20) includes the peripheral trench (60) adjacent the cutting edge (54) of the at least one tooth (40); and
the peripheral trench (60) recesses the cutting edge (54) by a distance (S_{E}) from the continuation/projection (68) of the first face (48).

13. The broach (20) or broach segment (20) of claim 12 wherein:
the peripheral trench (60) has a maximum depth (S_{D}) at least 110% of the recess distance (S_{E}); and
the peripheral trench (60) has a concave inner boundary at a terminal angle (θ_{C}) of 55° to 80° off parallel to said projection (68).

14. The broach or broach segment of any of claims 10 to 13 wherein:
the broach (20) or broach segment (20) includes the peripheral trench (60) adjacent the cutting edge (54) of the at least one tooth (40); and
the peripheral trench (60) is in at least one flat facet.

15. The broach of any of claims 10 to 13 wherein:
the broach (20) or broach segment (20) includes the peripheral trench (60) adjacent the cutting edge (54) of the at least one tooth (40); and
the peripheral trench (60) is continuous along at least two lobes (80A-80D) on each side of at least one tooth (40).
